# EUROPEAN PATENT SPECIFICATION

(11) **EP 3 148 878 B1**
(45) Date of publication and mention of the grant of the patent: **30.12.2020**
(21) Application number: 15727053.9
(22) Date of filing: 28.05.2015
(51) Int. Cl.: B64C 27/72

(54) **A ROTOR BLADE SYSTEM**
ROTORBLATTSYSTEM
SYSTÈME DE PALE DE ROTOR

(30) Priority: 28.05.2014 GB 201409424
(43) Date of publication of application: 05.04.2017
(73) Proprietor: Agustawestland Limited, Yeovil, Somerset BA20 2YB (GB)
(72) Inventor: HARDICK, Mark, Yeovil, Somerset BA20 2TQ (GB); STACEY, Simon, Yeovil Somerset BA20 2FE (GB)
(74) Representative: Forresters IP LLP
(86) International application number: PCT/GB2015/051552
(87) International publication number: WO 2015/181552

(56) References cited:
- EP-A1- 1 262 404
- EP-A1- 2 514 668
- EP-A2- 2 631 175
- JP-A- H09 254 893
- US-A- 3 158 338
- US-A1- 2011 266 391
- US-B1- 6 209 824
- US-B1- 8 647 059

## Description

### Description of Invention

This invention relates to a rotor blade system which in use is subject to fluid flow. More particularly, but not exclusively, the invention relates to a rotor blade system for a rotary wing aircraft such as a helicopter.

The invention has application to other rotor blade systems, as persons skilled in the art will no doubt appreciate, such as for examples only, propellers and turbine blades.

A rotor blade system typically includes a plurality of rotor blades which are connected to each other and rotate around an axis. The rotor blades for example, have a main body with an outer surface including an upper camber surface and a lower camber surface, and a leading edge and a trailing edge, a blade tip and a root end. The trailing edge particularly of the blade may have attached to it a control surface, such as for example only, a flap, the position of which is variable to affect fluid flow over the blade, for example to improve the performance of the blade, e.g. during the transition between hover and forward flight. For example the flap may be lowered from its usual raised position when the helicopter is in forward flight, to a lowered position to improve performance in hover. One such flap to which the present invention is relevant is what is known as a gurney or wickerbill flap, which is positioned at the trailing edge of a rotor blade.

Examples of the prior art are provided by US 3 158 338, US 6 209 824 and JP H09 254893.

According to a first aspect of the invention we provide a rotor blade according to claim 1.

Further features of the first aspect of the invention are set out in claims 2 to 12 appended hereto.

According to a second aspect of the invention we provide, according to claim 13, a helicopter having a rotor blade system according to the first aspect of the invention.

Embodiments of the invention will now be described with reference to the accompanying drawings in which:-
FIGURE 1 is an illustrative view of a helicopter with a rotor blade system in accordance with the present invention;
FIGURE 2 is a schematic cross-sectional side view of the rotor blade in accordance with the present invention;
FIGURE 3 is a further schematic cross-sectional side view of the rotor blade in accordance with the present invention;
FIGURE 4 is a schematic cross-sectional side view of a fluid flow altering surface in accordance with the present invention shown in a first position;
FIGURE 5 is an underside view of a rotor blade in accordance with the present invention during a cycle of the rotor blade system.
FIGURE 6 is a perspective view of a rotor blade according to the present invention.
FIGURE 7 is a schematic cross-sectional side view of a fluid flow altering surface in accordance with an example not belonging to the present invention shown in a second position; and
FIGURE 8 is a schematic cross-sectional side view of a fluid flow altering surface in accordance with the present invention shown in a second position.

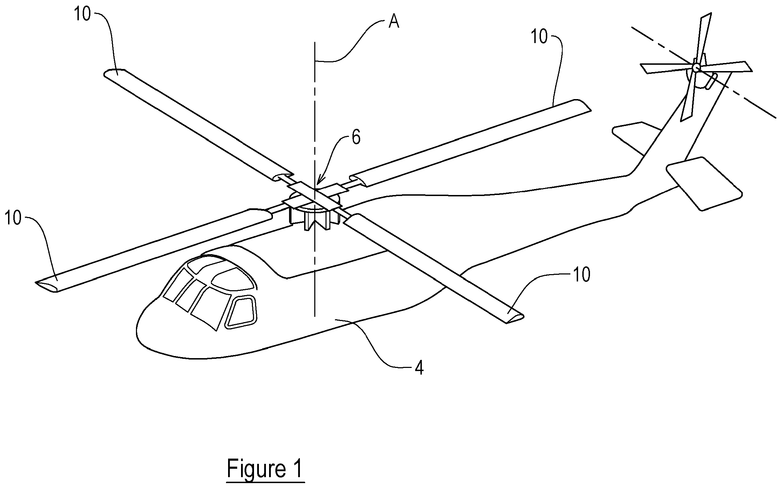

Referring firstly to figure 1, this shows a rotor blade system 6 in accordance with the present invention. The rotor blade system 6 comprises a plurality of (four) rotor blades 10 which in this embodiment are substantially identical to each other. It should be appreciated that fewer or more blades could be utilised without departing from the scope of the present invention.

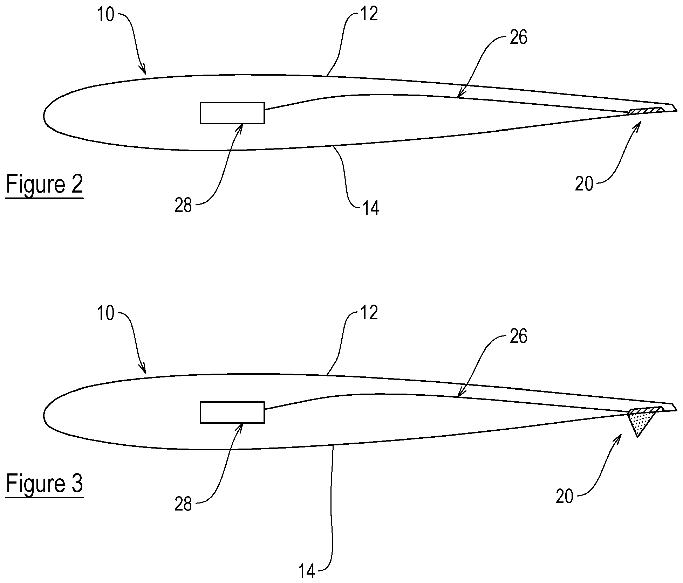

The schematic cross-sectional views of figures 2 and 3 show an example of a rotor blade 10 that includes a first, upper, surface 12 and a second, lower, surface 14 which together define the external surface of the blade. The surfaces are generally opposite each other as to be expected from a rotor blade.

The rotor blade 10 includes a fluid flow altering surface 20 which is positioned on an underside of the blade 10. The surface 20 forms a continuous surface with the lower surface 14 and is positioned towards to trailing edge 21 of the rotor blade 10. The surface 20 is moveable between first (figure 2) and second (figure 3) positions. In the first position in figure 2 the surface 20 is positioned in line with the second surface 14 such that it offers a continuous surface. In the second position, it can be seen that the surface 20 extends outwardly from the surface 14 such as to engage with the flow of fluid, e.g. air, passing over the surface 14.

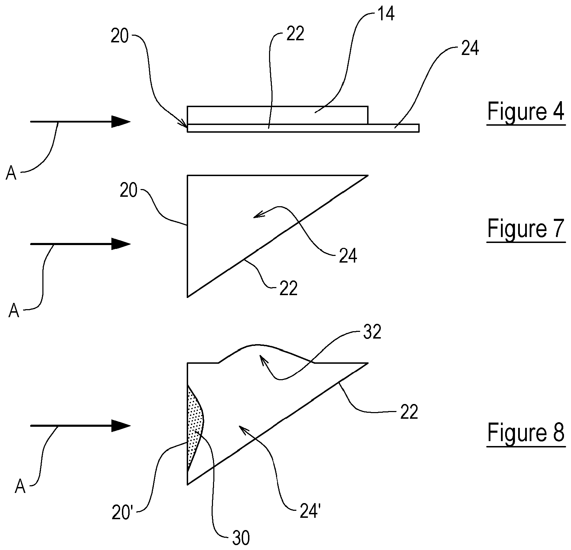

The surface 20 in this embodiment is a surface of an expandable member 22 which is moveable between its first and second positions, (see figures 4, 7 and 8).

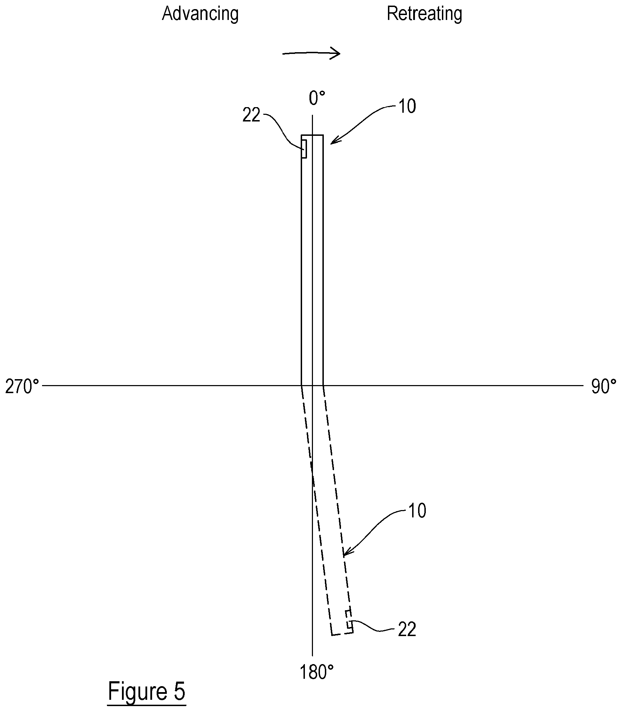

The system includes one or more sensors (not shown) for sensing the angular position of each blade (and thus its respective expandable member 22) about its rotational axis A. The system also includes one or more controllers capable of receiving a signal(s) from the sensor(s) and for effecting movement of the expandable member between its first and second positions depending upon the sensed position of each blade about the axis A. In a first operative state (as shown in figure 5) it can be seen that as the rotor blade 10 starts to retreat, i.e. approaches or goes past 0°, the expandable merrber 22 is moved into its second position. Similarly, as or shortly before, the expandable member reaches an angular position corresponding to advancing of the blade, i.e. 180°, the expandable member 22 is moved back into its first position. In a most preferred operation, the expandable member 22 is moved to its first position before the blades passes 180° and thus before the blade starts to advance.

In a second operative state of the system, the (preferably all) expandable member 22 is held in its second position for the entire cycle, e.g. when the helicopter is travelling at a relatively low speed.

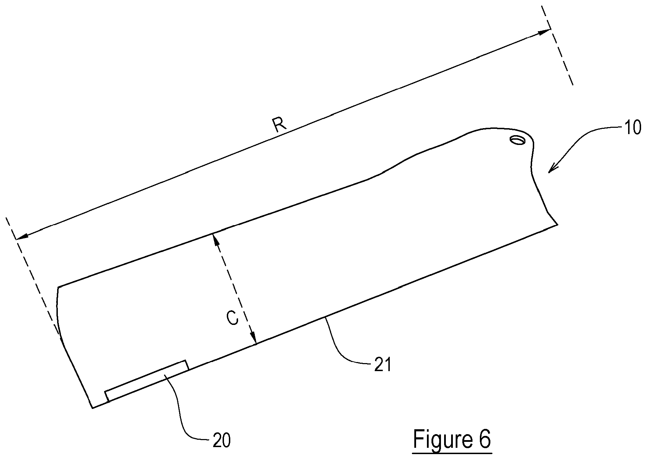

Figure 6 shows an example of the location of the expandable member 22 on an underside of the rotor blade 10. The rotor blade 10 has a root span R, a chord length C and a trailing edge 21. It has been found that it is preferable for the expandable member 22 to extend lengthwise between 0% to 30% of the chord length C; even more preferably to extend between 2% and 20%, and most preferably to extend between 5% and 10% of the chord length C, and be positioned on the trailing edge 21 of the rotor blade. The expandable member 22 is positioned at or near the tip edge of a rotor blade, and preferably extends width-wise between 10% to 20% of the root span length R, along the trailing edge 21 of the rotor blade 10. The expandable member 22 could also be positioned between 10% to 20% of the root span length R from the tip edge.

The expandable member 22 is made from a flexible material which is resiliently flexible. For example, the material may be a polymeric material of a fibre-reinforced polymer.

A particularly effective polymeric material for the expandable member 22 should be capable of withstanding internal inflated pressures in the range of 0.69 to 2.07 Bar (10PSI to 30PSI), preferably 1.03 to 1.38 Bar (15PSI to 20PSI). It will be appreciated, however, that the expandable member 22 could be made from any desirable material so long as it is capable of expanding between first and second conditions which correspond to the first and second positions of the surface 20.

It can be seen that the expandable member 22 includes a cavity 24 for receiving a fluid. The flow may be a gas or liquid and the cavity 24 may be connected by way of a conduit 26 to a fluid source in order to provide a passage for fluid (e.g. gas or liquid) into and out from the cavity 24.

As can be seen in figures 2 and 3 the system also includes a fluid movement device in the form of a pump 28 capable of urging fluid into the cavity 24 and drawing fluid from the cavity 24. Thus, the pump 28 is capable of increasing the pressure in the conduit 26 and thus the cavity 24 in order to move the expandable member 22 from its first to its second position.

Thus, the expandable member 22 expands from its first condition (see figure 4) to its second condition (see figure 7) by increasing the pressure fluid within the cavity 24. Likewise, the expandable member 22 contracts from its second condition to its first condition by decreasing the pressure or volume of fluid within the cavity 24.

Other embodiments could include a system which uses an accumulator to provide positive pressure to the system, or a pump system which can inflate and deflate the expandable member 22. These embodiments are merely suggestions of how the invention could be effected and in no way should be taken to be limiting.

As mentioned previously, when the surface 20 is in its first position (see figure 2) the surface 20 does not greatly affect the flow of fluid over the second surface 14. When the surface 20 is in its second condition (see figure 3) the surface 20 does affect the flow of fluid over the surface 14. When in the position shown in figure 3, the surface 20 is positioned in a plane substantially perpendicular to the surface 14 although it should be appreciated that it can be inclined to any desired angle relative to the surface 14.

Whilst the rotor blade system 6 described could use any shape of rotor blade 10, it has been found to be particularly effective in combination with a blade having a swept back portion at or near its tip.

Figure 8 shows that the surface 20 is connected to a stiffening member 30 for providing resistance to forces experienced by the surface 20 arising from airflow thereover. The stiffening member 30 is attached to an inwardly / rearwardly facing surface which is opposite to the surface 20. The blade 10 is also provided with a recess 32 in order to receive the stiffening member 30 when the surface 20 is moved to its first, inoperative, position. Thus, it will be seen that the stiffening member 30 is provided within the cavity 24. For both cases discussed above the surface 14 is provided with the recess to receive the whole or a part of the expandable member 22 so that when in the first position it does not greatly affect the airflow over the surface 14.

In embodiments the expandable member is inflatable and deflatable between its first and second positions and thus the material from which the expandable member is made is stretchable to enable it to be expanded under inflation and deflated to its previous condition.

Whilst in the embodiments described above the pump 28 is shown within the envelope of the aerofoil blade, between the first and second surfaces 12, 14, it should be appreciated that the pump could be provided elsewhere on the aircraft with a suitable extension of the conduit 26 being provided so as to provide a continuous passage between the pump and the cavity 24.

## Claims

1. A rotor blade system having a plurality of rotor blades (10), wherein at least one of the rotor blades includes an outer surface having generally opposing first (12) and second (14) surfaces, the rotor blade including a fluid flow altering surface (20) positioned relative to one of the first or second surfaces which is moveable between first and second positions, the fluid flow altering surface forming a substantially continuous surface of the first or second surface when in the first position, wherein movement of the fluid flow altering surface is effected by an expandable member (22) made from a resiliently flexible material and which is inflatable and deflatable, the expandable member including a cavity (24) for receiving a fluid, for example a gas or a liquid, wherein the fluid flow altering surface is a surface of the expandable member, wherein the expandable member is positioned at or close to a tip edge of the rotor blade, **characterised in that** the fluid flow altering surface is connected to a stiffening member (30) for providing resistance to forces experienced by the member or the surface arising from airflow, wherein the stiffening member is attached to an inwardly/rearwardly facing surface of the expandable member which is opposite to the fluid flow altering surface, wherein the respective one of the first or second surfaces includes a recess (32) to receive the whole or a part of the stiffening member, and wherein the recess receives the whole or a part of the expandable member, when the surface is moved to its first position.

2. A rotor blade system according to claim 1 wherein, when the expandable member is in a first condition, the fluid flow altering surface is in its first position, and
wherein when the expandable member is in a second condition, the fluid flow altering surface is in its second position,
wherein, expansion of the expandable member from its first condition to its second condition effects movement of the fluid flow altering surface from its first position to its second position, and
wherein contraction of the expandable member from its second condition to its first condition effects movement of the fluid flow altering surface from its second position to its first position.

3. A rotor blade system according to claim 1 or claim 2 including a sensor for sensing the angular position of the expandable member about the axis of rotation of the system and a controller for moving the expandable member between its first and second positions based on sensed angular position of the expandable member, preferably
wherein the controller effects movement of the expandable member to its second position as, or shortly before, the expandable member reaches an angular position corresponding to retreating of the blade, and/or
wherein the controller effects movement of the expandable member to its first position as, or shortly before, the expandable member reaches an angular position corresponding to advancing of the blade.

4. A rotor blade system according to any one of the preceding claims wherein the expandable member is made from a polymer or fibre-reinforced polymer, or
wherein the expandable member is made from a polymeric material capable of withstanding pressures in the range of 0.69 to 2.07 Bar (10PSI to 30PSI), preferably 1.03 to 1.38 Bar (15PSI to 20PSI).

5. A rotor blade system according to any one of the preceding claims wherein the rotor blade system includes a conduit (26) fluidly connected to the cavity for providing a passage for fluid into and out from the cavity, preferably wherein the conduit is connected to a fluid movement device (28), for example a pump, capable of urging fluid into the cavity and drawing fluid from the cavity.

6. A rotor blade system according to any one of the preceding claims wherein the expandable member expands from its first condition to its second condition by increasing the pressure of fluid within the cavity, and
wherein the expandable member contracts from its second condition to its first condition by decreasing the pressure of fluid within the cavity.

7. A rotor blade system according to any one of the preceding claims wherein, when the fluid flow altering surface is in its first condition, the surface does not affect or greatly affect the flow of fluid over the respective one of the first or second surfaces, and
wherein, when the fluid flow altering surface is in its second condition, the surface does affect the flow of fluid over the respective one of the first or second surfaces.

8. A rotor blade system according to any one of the preceding claims wherein, when the fluid flow altering surface is in its second position, the fluid flow altering surface is positioned in a plane substantially perpendicular to the respective one of the first or second surfaces.

9. A rotor blade system according to any preceding claim wherein the expandable member is positioned at a suction, e.g. downstream of the airflow, side of the rotor blade.

10. A rotor blade system according to any preceding claim wherein the expandable member is positioned in a region of the blade which is between 10% to 20% of the root span length from the tip edge, and/or
wherein the expandable member extends between 10% and 20% of the root span length of the rotor blade, along a trailing edge of the rotor blade, and/or
wherein the expandable member is positioned in an region of the blade which is preferably between 0% and 30% of the chord length, more preferably between 2% and 20% of the chord length, and most preferably between 5% and 10% of the chord length.

11. A rotor blade system according to any one of the preceding claims wherein the stiffening member is positioned within the cavity.

12. A rotor blade system according to any preceding claim wherein the or each blade includes a swept back portion at or near its tip.

13. A helicopter including a rotor blade system according to any one of claims 1 to 12.

## Patentansprüche

1. Rotorblattsystem, das eine Vielzahl von Rotorblättern (10) aufweist, wobei zumindest eins der Rotorblätter eine Außenfläche einschließt, die generell entgegengesetzte erste (12) und zweite (14) Oberflächen aufweist, wobei das Rotorblatt eine Fluidströmung ändernde Oberfläche (20) einschließt, die relativ zu einer der ersten oder zweiten Oberflächen positioniert ist, die zwischen ersten und zweiten Positionen beweglich ist, wobei die Fluidströmung ändernde Oberfläche eine im Wesentlichen kontinuierliche Oberfläche der ersten oder zweiten Oberflächen, wenn in der ersten Position, bildet, wobei Bewegung der Fluidströmung ändernden Oberfläche durch ein ausdehnbares Element (22) bewirkt wird, das aus einem elastisch flexiblen Material hergestellt ist, und das aufblasbar und sich entleeren lässt, wobei das ausdehnbare Element einen Hohlraum (24) zum Empfangen eines Fluids, wie beispielsweise ein Gas oder eine Flüssigkeit einschließt, wobei die Fluidströmung ändernde Oberfläche eine Oberfläche des ausdehnbaren Elements ist, wobei das ausdehnbare Element an oder nahe einer Spitzenkante des Rotorblatts positioniert ist, **dadurch gekennzeichnet, dass** die Fluidströmung ändernde Oberfläche mit einem Versteifungselement (30) verbunden ist, um Widerstand gegen Kräfte bereitzustellen, die auf das Element oder die Oberfläche einwirken, die sich aus Luftströmung ergeben, wobei das Versteifungselement an eine nach innen/hinten gewandte Oberfläche des ausdehnbaren Elements angebracht ist, das sich entgegengesetzt zur Fluidströmung ändernden Oberfläche befindet, wobei die jeweilige der ersten oder zweiten Oberflächen eine Vertiefung (32) einschließt, um das Ganze oder einen Teil des Versteifungselements aufzunehmen, und wobei die Vertiefung das Ganze oder einen Teil des ausdehnbaren Elements aufnimmt, wenn die Oberfläche in ihre erste Position bewegt wird.

2. Rotorblattsystem nach Anspruch 1, wobei, wenn sich das ausdehnbare Element in einem ersten Zustand befindet, sich die Fluidströmung ändernde Oberfläche in ihrer ersten Position befindet, und
wobei, wenn sich das ausdehnbare Element in einem zweiten Zustand befindet, sich die Fluidströmung ändernde Oberfläche in ihrer zweiten Position befindet,
wobei Expansion des ausdehnbaren Elements, aus seinem ersten Zustand in seinen zweiten Zustand, Bewegung der Fluidströmung ändernden Oberfläche aus ihrer ersten Position in ihre zweite Position bewirkt, und
wobei Kontraktion des ausdehnbaren Elements, aus seinem zweiten Zustand in seinen ersten Zustand, Bewegung der Fluidströmung ändernden Oberfläche aus ihrer zweiten Position in ihre erste Position bewirkt.

3. Rotorblattsystem nach Anspruch 1 oder Anspruch 2, das einen Sensor zum Abtasten der Winkelposition des ausdehnbaren Elements um die Drehachse des Systems und einen Controller zum Bewegen des ausdehnbaren Elementes zwischen seinen ersten und zweiten Positionen auf Basis einer abgetasteten Winkelposition des ausdehnbaren Elements einschließt, vorzugsweise
wobei der Controller Bewegung des ausdehnbaren Elements in seine zweite Position sowie, oder kurz bevor, das ausdehnbare Element eine Winkelposition erreicht, die dem Zurückziehen des Blattes entspricht, und/oder
wobei der Controller Bewegung des ausdehnbaren Elements in seine erste Position sowie, oder kurz bevor, das ausdehnbare Element eine Winkelposition erreicht, die dem Vorrücken des Blattes entspricht.

4. Rotorblattsystem nach irgendeinem der vorhergehenden Ansprüche, wobei das expandierende Element aus einem Polymer oder faserverstärktem Polymer hergestellt ist, oder
wobei das ausdehnbare Element aus einem Polymermaterial hergestellt ist, das fähig ist, Drücken im Bereich von 0,69 bis 2,07 Bar (10 PSI bis 30 PSI), vorzugsweise 1,03 bis 1,38 Bar (15 PSI bis 20 PSI) zu widerstehen.

5. Rotorblattsystem nach irgendeinem der vorhergehenden Ansprüche, wobei das Rotorblattsystem eine Leitung (26) einschließt, die fluidisch mit dem Hohlraum zum Bereitstellen eines Durchgangs für Flüssigkeit in den und aus dem Hohlraum verbunden ist, vorzugsweise
wobei die Leitung mit einem Gerät (28) zum Bewegen von Flüssigkeit, beispielsweise einer Pumpe, verbunden ist, die fähig ist, Flüssigkeit in den Hohlraum zu drängen oder Flüssigkeit aus dem Hohlraum zu ziehen.

6. Rotorblattsystem nach irgendeinem der vorhergehenden Ansprüche, wobei das ausdehnbare Element aus seinem ersten Zustand in seinen zweiten Zustand, durch Erhöhen des Flüssigkeitsdrucks innerhalb des Hohlraums, expandiert, und wobei sich das ausdehnbare Element aus seinem zweiten Zustand in seinen ersten Zustand, durch Senken des Flüssigkeitsdrucks innerhalb des Hohlraums, zusammenzieht.

7. Rotorblattsystem nach irgendeinem der vorhergehenden Ansprüche, wobei, wenn sich die Fluidströmung ändernde Oberfläche in ihrem ersten Zustand befindet, die Oberfläche die Strömung von Fluid über die jeweilige der ersten und zweiten Oberflächen nicht beeinflusst oder erheblich beeinflusst, und
wobei, wenn sich die Fluidströmung ändernde Oberfläche in ihrem zweiten Zustand befindet, die Oberfläche die Strömung von Fluid über die jeweilige der ersten oder zweiten Oberflächen beeinflusst.

8. Rotorblattsystem nach irgendeinem der vorhergehenden Ansprüche, wobei, wenn sich die Fluidströmung ändernde Oberfläche in ihrer zweiten Position befindet, die Fluidströmung ändernde Oberfläche in einer im Wesentlichen senkrechten Ebene zu der jeweiligen einen der ersten oder zweiten Oberflächen positioniert ist.

9. Rotorblattsystem nach irgendeinem vorhergehenden Anspruch, wobei das ausdehnbare Element auf einer Saugseite, z. B. stromabwärts der Luftströmung, des Rotorblattes positioniert ist.

10. Rotorblattsystem nach irgendeinem vorhergehenden Anspruch, wobei das ausdehnbare Element in einem Bereich des Blattes positioniert ist, der zwischen 10 % bis 20 % der Wurzelspannweite von der Spitzenkante beträgt, und/oder wobei sich das ausdehnbare Element zwischen 10 % und 20 % der Wurzelspannweite des Rotorblattes, entlang einer Hinterkante des Rotorblattes erstreckt, und/oder
wobei das ausdehnbare Element in einem Bereich des Blattes positioniert ist, der vorzugsweise zwischen 0 % und 30 % der Sehnenlänge, noch bevorzugter zwischen 2 % und 20 % der Sehnenlänge und meist bevorzugt zwischen 5 % und 10 % der Sehnenlänge beträgt.

11. Rotorblattsystem nach irgendeinem der vorhergehenden Ansprüche, wobei das Versteifungselement innerhalb des Hohlraums positioniert ist.

12. Rotorblattsystem nach irgendeinem vorhergehenden Anspruch, wobei das oder jedes Blatt einen gepfeilten Abschnitt an oder nahe seiner Spitze einschließt.

13. Hubschrauber, der ein Rotorblattsystem nach irgendeinem der Ansprüche 1 bis 12 einschließt.

## Revendications

1. Un système de pale de rotor ayant une pluralité de pales de rotor (10), dans lequel au moins une des pales de rotor inclut une surface extérieure ayant une première (12) et une deuxième (14) surfaces généralement opposées, la pale de rotor incluant une surface de modification d'écoulement de fluide (20) positionnée par rapport à soit la première, soit la deuxième surface laquelle est mobile entre des première et deuxième positions, la surface de modification d'écoulement de fluide formant une surface sensiblement continue de la première ou la deuxième surface à la première position, dans lequel le déplacement de la surface de modification d'écoulement de fluide est effectué par un élément expansible (22) réalisé avec un matériau flexible élastique et qui est peut être gonflé et dégonflé, l'élément expansible incluant une cavité (24) pour recevoir un fluide, par exemple un gaz ou un liquide, dans lequel la surface de modification d'écoulement de fluide est une surface de l'élément expansible, dans lequel l'élément expansible est positionné à ou proche d'un bord d'extrémité de la pale de rotor, **caractérisé en ce que** la surface de modification d'écoulement de fluide est raccordée à un élément de raidissement (30) pour fournir une résistance aux forces subies par l'élément ou la surface provenant de l'écoulement d'air, dans lequel l'élément de raidissement est assujetti à une surface tournée vers l'intérieur/l'extérieur de l'élément expansible qui est opposé à la surface de modification d'écoulement de fluide, dans lequel respectivement soit la première, soit la deuxième surface inclut un renfoncement (32) pour recevoir la totalité ou une partie de l'élément de raidissement, et dans lequel le renfoncement reçoit la totalité ou une partie de l'élément expansible, quand la surface est déplacée à sa première position.

2. Un système de pale de rotor selon la revendication 1 dans lequel, quand l'élément expansible est dans une première condition, la surface de modification d'écoulement de fluide est à sa première position, et
dans lequel quand l'élément expansible est dans une deuxième condition, la surface de modification d'écoulement de fluide est à sa deuxième position,
dans lequel, l'expansion de l'élément expansible de sa première condition à sa deuxième condition effectue le déplacement de la surface de modification d'écoulement de fluide de sa première position à sa deuxième position, et
dans lequel la contraction de l'élément expansible de sa deuxième condition à sa première condition effectue le déplacement de la surface de modification d'écoulement de fluide de sa deuxième position à sa première position.

3. Un système de pale de rotor selon la revendication 1 ou la revendication 2 incluant un capteur pour détecter la position angulaire de l'élément expansible autour de l'axe de rotation du système et une unité de commande pour déplacer l'élément expansible entre sa première et sa deuxième positions sur la base de la position angulaire détectée de l'élément expansible, de préférence
dans lequel l'unité de commande effectue le déplacement de l'élément expansible à sa deuxième position au moment où, ou juste avant que, l'élément expansible atteint une position angulaire correspondant au retrait de la pale, et/ou
dans lequel l'unité de commande effectue le déplacement de l'élément expansible à sa première position au moment, ou juste avant que, l'élément expansible atteint une position angulaire correspondant à l'avance de la pale.

4. Un système de pale de rotor selon l'une quelconque des revendications précédentes dans lequel l'élément expansible est réalisé avec un polymère ou un polymère renforcé de fibres, ou
dans lequel l'élément expansible est réalisé avec un matériau polymère capable de résister à des pressions comprises entre 0,69 et 2,07 Bar (entre 10 PSI et 30 PSI), de préférence entre 1,03 et 1,38 Bar (entre 15 PSI et 20 PSI).

5. Un système de pale de rotor selon l'une quelconque des revendications précédentes dans lequel le système de pale de rotor inclut un conduit (26) en communication fluidique avec la cavité pour fournir un passage permettant au fluide d'entrer et de sortir de la cavité, de préférence
dans lequel le conduit est raccordé à un dispositif de déplacement de fluide (28), par exemple une pompe, capable de pousser le fluide dans la cavité et d'aspirer le fluide de la cavité.

6. Un système de pale de rotor selon l'une quelconque des revendications précédentes dans lequel l'élément expansible se dilate de sa première condition à sa deuxième condition en augmentant la pression du fluide dans la cavité, et
dans lequel l'élément expansible se contracte de sa deuxième condition à sa première condition en diminuant la pression du fluide dans la cavité.

7. Un système de pale de rotor selon l'une quelconque des revendications précédentes dans lequel, quand la surface de modification d'écoulement de fluide est dans sa première condition, la surface n'affecte pas ou n'affecte pas beaucoup l'écoulement de fluide sur respectivement soit la première, soit la deuxième surface, et
dans lequel, quand la surface de modification d'écoulement de fluide est dans sa deuxième condition, la surface affecte l'écoulement de fluide sur respectivement soit la première, soit la deuxième surface.

8. Un système de pale de rotor selon l'une quelconque des revendications précédentes dans lequel, quand la surface de modification d'écoulement de fluide est à sa deuxième position, la surface de modification d'écoulement de fluide est positionnée dans un plan sensiblement perpendiculaire à la surface respective des première ou deuxième surfaces.

9. Un système de pale de rotor selon l'une quelconque des revendications précédentes dans lequel l'élément expansible est positionné au niveau d'une aspiration, par ex. en aval du côté de l'écoulement d'air de la pale de rotor.

10. Un système de pale de rotor selon l'une quelconque des revendications précédentes dans lequel l'élément expansible est positionné dans une région de la pale qui est entre 10 % et 20 % de la longueur de portée de l'emplanture depuis le bord d'extrémité, et/ou
dans lequel l'élément expansible s'étend entre 10 % et 20 % de la longueur de l'emplanture de la pale de rotor, le long d'un bord de fuite de la pale de rotor, et/ou
dans lequel l'élément expansible est positionné dans une région de la pale qui est de préférence entre 0 % et 30 % de la longueur de corde, plus préférablement entre 2 % et 20 % de la longueur de corde, et encore plus préférablement entre 5 % et 10 % de la longueur de corde.

11. Un système de pale de rotor selon l'une quelconque des revendications précédentes dans lequel l'élément de raidissement est positionné dans la cavité.

12. Un système de pale de rotor selon l'une quelconque des revendications précédentes dans lequel la ou les pales incluent une partie en flèche vers l'arrière à ou près de son extrémité.

13. Un hélicoptère incluant un système de pale de rotor selon l'une quelconque des revendications 1 à 12.
